(19) Europäisches Patentamt / European Patent Office / Office européen des brevets

(11) **EP 2 724 116 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(21) Anmeldenummer: **12729621.8**

(22) Anmeldetag: **25.06.2012**

(51) Int Cl.:
*G01B 11/24* (2006.01)   *G01B 9/02* (2006.01)

(86) Internationale Anmeldenummer:
**PCT/EP2012/062246**

(87) Internationale Veröffentlichungsnummer:
**WO 2013/000866 (03.01.2013 Gazette 2013/01)**

(54) **INTERFEROMETRISCHES ENTFERNUNGSMESSVERFAHREN ZUM VERMESSEN VON OBERFLÄCHEN UND EBENSOLCHE MESSANORDNUNG**

INTERFEROMETRIC DISTANCE MEASURING METHOD FOR MEASURING SURFACES, AND SUCH A MEASURING ARRANGEMENT

PROCÉDÉ DE MESURE DE DISTANCE PAR INTERFÉROMÉTRIE POUR LE MESURAGE DE SURFACE ET AGENCEMENT DE MESURE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2011 EP 11171582**

(43) Veröffentlichungstag der Anmeldung:
**30.04.2014 Patentblatt 2014/18**

(73) Patentinhaber: **Hexagon Technology Center GmbH**
**9435 Heerbrugg (CH)**

(72) Erfinder: **JENSEN, Thomas**
**CH-9400 Rorschach (CH)**

(74) Vertreter: **Kaminski Harmann Patentanwälte AG**
**Landstrasse 124**
**9490 Vaduz (LI)**

(56) Entgegenhaltungen:
WO-A1-2009/036861   WO-A1-2009/059406
DE-A1- 19 819 762   US-A1- 2004 061 865
US-A1- 2007 115 476   US-A1- 2008 117 436

**Beschreibung**

Die Erfindung betrifft ein interferometrisches Entfernungsmessverfahren zum Vermessen von Oberflächen nach dem Oberbegriff des Anspruchs 1 und eine ebensolche Entfernungsmessanordnung nach dem Oberbegriff des Anspruchs 6 sowie ein Messgerät zur Vermessung von Oberflächen.

In vielen Anwendungsbereichen besteht das Bedürfnis, Oberflächen von Objekten und damit auch die Objekte selbst mit hoher Genauigkeit zu vermessen. Dies gilt insbesondere für die fertigende Industrie, für die das Vermessen und Überprüfen von Oberflächen von Werkstücken hohe Bedeutung hat. Zu diesem Zweck existiert eine Vielzahl von Ansätzen, die von kontaktierenden Verfahren bis hin zu optischen Sensoren reichen. Im Bereich der hochpräzisen optischen Verfahren spielen interferometrische Messprinzipien, insbesondere in Zusammenhang mit der Verwendung von Koordinatenmessgeräten, eine zunehmende Rolle.

Eine Möglichkeit besteht in der Verwendung von Weisslichtinterferometrie zur hochpräzisen Vermessung. Hierbei erfolgt der Einsatz entweder scannend, d.h. durch Verstellung des Interferometers, und damit langsam oder bei spektral aufgelöster Detektion in der Regel unter Beschränkung auf einen Messbereich von wenigen Millimetern. Damit ist der Einsatzbereich solcher Anordnungen eingeschränkt und insbesondere Werkstücke mit stark strukturierter Oberfläche und entsprechend variierenden Messdistanzen sind nicht oder nur mit großen Einschränkungen, wie bspw. langen Verfahrzeiten, zu vermessen.

Andere Verfahren verwenden einen frequenzmodulierten Laserstrahl als Messstrahlung für eine interferometrische Anordnung. So ist bspw. aus der WO 2009/036861 A1 ein Ansatz bekannt, bei dem in einem Verfahren zur Vermessung von Oberflächen ein frequenzmodulierter Laserstrahl erzeugt und auf die zu vermessende Oberfläche emittiert wird. Nach dem Empfangen der von der Oberfläche als Ziel zurückgestreuten Messstrahlung wird die Entfernung interferometrisch bestimmt, wobei ein Mess- und Referenzinterferometerarm mit einem teilweise gemeinsamen Strahlengang verwendet werden. Abweichungen vom im wesentlichen senkrechten Auftreffen der Messstrahlung auf die Oberfläche beim Entfernungsmessen werden algorithmisch berücksichtigt oder beim abtastenden Führen durch Steuern des Emittierens der Messstrahlung vermieden oder verringert.

Der teilweise gemeinsame Strahlengang von Mess- und Referenzinterferometerarm wird hierbei durch einen Reflex innerhalb des optischen Messkopfes begrenzt, der hierdurch das Referenzinterferometer definiert. Diese sogenannte Common-Path-Architektur erlaubt es, die lokale Oszillatorebene innerhalb der Messkopfoptik, z.B. auch an der optischen Austrittsfläche, und damit nahe am Ziel anzuordnen. Der Vorteil dieses Aufbaus liegt darin, dass sich Umwelteinflüsse, wie z.B. Temperaturänderungen oder Vibrationen, auf beide Interferometerarme in gleicher Weise auswirken, so dass die generierten Signale diesbezüglich gleichen Einflüssen unterliegen. Ein Nachteil des Aufbaus ist jedoch die Erfordernis einer großen Kohärenzlänge, wenn eine ausreichende Signalstärke innerhalb des Arbeitsbereichs gewährleistet werden soll.

Dieses Problem wird bekannterweise dadurch gelöst, indem der Wegunterschied zwischen dem Mess-und Referenzarm in einem zweiten Interferometer kompensiert wird, wie zum Beispiel aus den Dokumenten US2007/0115476 A1 und WO2009/059406 A1 bekannt.

Im Bereich der Weisslichtinterferometrie werden hingegen externe Interferometerarme mit verstellbarer Verzögerung verwendet. Allerdings sind für den häufigen Anwendungsbereich der Medizintechnik auch andere Rahmenbedingungen gegeben. So sind die abzutastenden bzw. zu vermessenden Strukturen grundsätzlich andersartig und in Hinblick auf die Distanzen geringer strukturiert. Zudem ist keine absolute Distanzinformation erforderlich und die typischen für eine Messung benötigten Zeitskalen sind geringer als bei Vermessungen von industriellen Teilen. Hier werden aufgrund der zu vermessenden Oberflächen längere Messdauern benötigt und aufgrund der zu vermessenden Geometrien sind zumeist auch größere Messbereiche erforderlich. Lösungen dieses Stands der Technik finden sich beispielsweise in US 2004/061865, US 2008/117436 oder DE 198 19 762, welche Weisslichtinterferometer beschrieben, welche keine durchstimmbare Laserquelle zur Erzeugung frequenzmodulierter Laserstrahlung aufweisen. In US 4 627 731 dient die Aufteilung des Lichtsignals vor dem Messinterferometer, in zwei Pfade mit Modulatoren unterschiedlicher Frequenz, der Erzeugung einer Heterodyne-Frequenz. Dieses sogenannte Modulationsinterferometer bedarf auch eines genauen Abgleichens der Pfadlängen.

Der Messbereich wird bei interferometrischen Messanordnungen mit frequenzmodulierter Laserstrahlung jedoch durch deren Kohärenzlänge begrenzt, so dass der Anwendungsbereich Beschränkungen unterliegt und steuerungsseitig entsprechender Aufwand erforderlich ist, um ein Messobjekt vollständig und in kurzer Zeit abtasten und vermessen zu können.

Eine Aufgabe besteht darin, ein verbessertes Messverfahren bzw. Messanordnung zur Vermessung von Oberflächen bzw. zur Erfassung von Oberflächentopographien bereitzustellen.

Eine weitere Aufgabe besteht darin, ein solches Messverfahren bzw. eine Messanordnung bereitzustellen, welche die durch die Kohärenzlänge bestehenden Beschränkungen überwindet und somit den messbaren Distanzbereich vergrössert.

Diese Aufgaben werden durch die Gegenstände der Ansprüche 1, 6 bzw. 13 oder der abhängigen Ansprüche gelöst bzw. die Lösungen weitergebildet.

Die Erfindung nutzt ein interferometrisches Messprinzip mit frequenzmodulierter, d.h. durchstimmbarer Laserquelle und entsprechendem Messaufbau, wie es beispielhaft auch in der WO 2009/036861 A1 beschrieben ist.

Erfindungsgemäss wird neben dem normalen zur Distanzmessung verwendeten Strahlungsfeld eine verzögerte Kopie bereitgestellt, deren Verzögerung im wesentlichen der Laufzeit der eigentlichen Messstrahlung zum Ziel und wieder zurück entspricht, so dass die effektive Distanz verringert wird. Durch diesen Ansatz wird der Arbeitspunkt der gesamten Messanordnung in Richtung auf das Ziel verschoben, so dass die vermessbare Maximaldistanz vergrössert und die durch die Kohärenzlänge bestehende Beschränkung überwunden wird. Die durch die Verzögerung bewirkte optische Pfaddifferenz entspricht dabei der zu einer Entfernung im vorgegebenen Distanzbereich korrespondierenden optischen Pfaddifferenz zu- oder abzüglich der Kohärenzlänge des Lasers. Insbesondere entspricht die optische Pfaddifferenz der Verzögerung höchstens der zur Distanz zu der zu vermessenden Oberfläche korrespondierenden optischen Pfaddifferenz und wenigstens der zur Distanz zu der zu vermessenden Oberfläche korrespondierenden optischen Pfaddifferenz abzüglich der Kohärenzlänge des Lasers oder aber wenigstens der zur Distanz zu der zu vermessenden Oberfläche korrespondierenden optischen Pfaddifferenz und höchstens der zur Distanz zu der zu vermessenden Oberfläche korrespondierenden optischen Pfaddifferenz zuzüglich der Kohärenzlänge des Lasers.

Ein Ansatz zur Realisierung eines erfindungsgemässen verzögerten Strahlungsfelds ist die Integration eines Strahlteilers mit nachfolgender optischer Verzögerungsstrecke hinter der Laserquelle. Eine solche Verzögerungsstrecke ist als Mach-Zehnder-Interferometer zumindest teilweise in Zerodur realisiert. Hierdurch lassen sich im Prinzip identische Strahlungsfelder erzeugen, die nur um die optische Pfaddifferenz gegenseitig zeitlich verschoben bzw. verzögert sind.

Beispielsweise kann ein Mach-Zehnder-Interferometer als Verzögerungsstrecke bzw. Verzögerungskomponente in eine Common-Path-Anordnung ohne Änderung der Standard-Auslegung integriert werden. Hierdurch kann z. B. der Arbeitspunkt des Interferometers ausserhalb der Optik verlagert werden, so dass die normalerweise durch die Kohärenzlänge bewirkten Beschränkungen überwunden werden können. Hierbei kann der Messbereich von bspw. 30 mm beibehalten werden, lediglich seine Lage gegenüber dem optischen Messkopf wird in Zielrichtung verschoben, so dass auch grössere Distanzen bzw. Abstände zum Messobjekt realisierbar werden. Grössere Distanzen erlauben wiederum höhere Verfahrgeschwindigkeiten des Probenkopfes und damit kürzere Messzeiten oder andere Messpfad-Geometrien.

Eine weitere Verbesserung der erfindungsgemässen Anordnung kann zudem durch ein auf die Solldistanz hin ausgelegte Brennweite des Linsensystems des Probenkopfes erreicht werden.

Um eine Veränderung der Verzögerung während oder zwischen den Messungen zu verhindern, ist es vorteilhaft, die Verzögerungskomponente mechanisch und thermische möglichst robust auszugestalten. Die Kalibrierung kann hierbei mittels bekannter Verfahren erfolgen, z.B. durch Abtasten einer Referenzsphäre mit bekannter Geometrie.

Ein erfindungsgemässes Messverfahren und eine erfindungsgemässe Messanordnung zum interferometrischen Vermessen von Oberflächen werden nachfolgend anhand von in der Zeichnung schematisch dargestellten Ausführungsbeispielen rein beispielhaft näher beschrieben oder erläutert. Im einzelnen zeigen

Fig.1    die schematische Darstellung des erfindungsgemässen Grundprinzips der optischen Verzögerung eines Strahlungsanteils in einer interferometrischen Entfernungsmessanordnung;

Fig.2    die Darstellung eines ersten Ausführungsbeispiels einer Verzögerungsstrecke für die erfindungsgemässe Entfernungsmessanordnung;

Fig.3    die Darstellung der Wirkung des erfindungsgemässen Grundprinzips der optischen Verzögerung;

Fig.4    die schematische Darstellung der interferometrischen Messanordnung in einem Messgerät des Stands der Technik zur Vermessung von Oberflächen;

Fig.5    die Darstellung des strukturellen Aufbaus eines Probenkopfs für ein ebensolches Messgerät;

Fig.6    die schematische Darstellung von Sende- und Empfangsoptik für ein ebensolches Messgerät;

Fig.7    die schematische Darstellung eines ersten Ausführungsbeispiels der erfindungsgemässen interferometrischen Messanordnung;

Fig.8a-b    die graphische Darstellung in der Frequenzdomäne für ein erstes Beispiel der Strahlungsfelder für das erste Ausführungsbeispiel;

Fig.9a-b    die graphische Darstellung in der Frequenzdomäne für ein zweites Beispiel der Strahlungsfelder für das erste Ausführungsbeispiel;

Fig.10    die schematische Darstellung eines zweiten Ausführungsbeispiels der erfindungsgemässen interferometrischen Messanordnung;

Fig.11    die schematische Darstellung eines nicht beanspruchten Ausführungsbeispiels der interferometrischen Messanordnung;

Fig.12    die Darstellung einer Kohärenzkurve für die nachfolgenden Simulationen;

Fig.13    die Darstellung des Strahlquerschnitts für ein erstes Simulationsbeispiel einer Entfernungsmessanordnung des Stands der Technik;

Fig.14    die Darstellung eines Tomogramms des empfangenen Signals für das erste Simulationsbeispiel;

Fig.15    die Darstellung des Strahlquerschnitts für ein zweites Simulationsbeispiel;

Fig.16    die Darstellung eines Tomogramms des empfangenen Signals für das zweite Simulationsbeispiel ohne Verzögerung;

Fig.17    die Darstellung des Tomogramms des empfangenen Signals für das zweite Simulationsbeispiel mit erfindungsgemässer Verzögerung;

Fig.18    die Darstellung des Strahlquerschnitts für ein drittes Simulationsbeispiel einer erfindungsgemässen Entfernungsmessanordnung mit optimierter Optik;

Fig.19    die Darstellung eines Tomogramms des empfangenen Signals für das dritte Simulationsbeispiel mit erfindungsgemässer Verzögerung und

Fig.20    die Darstellung der Verzögerungsstrecke für die erfindungsgemässe Entfernungsmessanordnung.

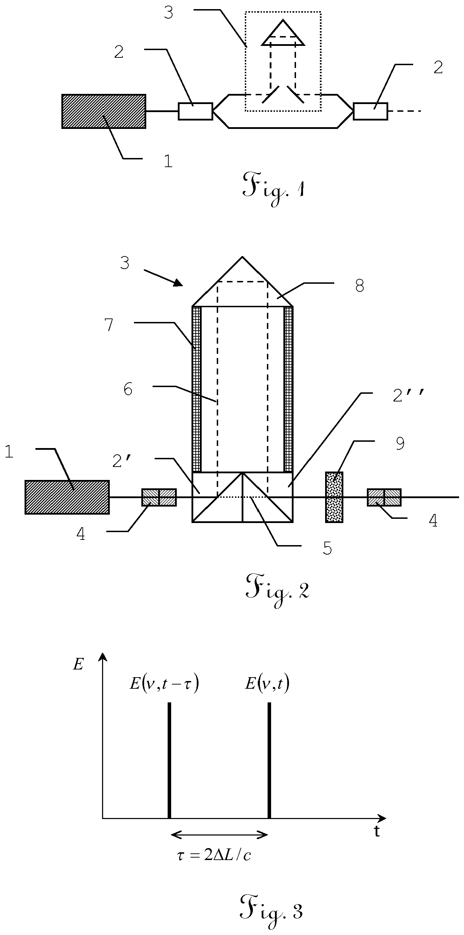

Fig.1 zeigt die schematische Darstellung des erfindungsgemässen Grundprinzips der optischen Verzögerung eines Strahlungsanteils in einer interferometrischen Entfernungsmessanordnung. In einer solchen Anordnung zur Vermessung von industriellen Werkstücken wird durch eine frequenzmodulierte, das heisst durchstimmbare, Laserquelle 1 ein Laserstrahl als Messstrahlung MS erzeugt, wobei eine Kohärenzlänge von mehr als 1 Millimeter, vorzugsweise von mehr als 60 Millimetern besitzt. In den zur Vermessung der Oberfläche des Werkstückes verwendeten optischen Strahlgang ist eine Verzögerungskomponente eingefügt, die zwei optische Koppler 2 aufweist, von denen einer als Strahlteiler für die Messstrahlung der frequenzmodulierten Laserquelle 1 ausgestaltet ist, wobei diese in zwei Strahlungsanteile aufgeteilt wird.

Einer der beiden Strahlungsanteile wird unverzögert über die zu messende Distanz zum Ziel und wieder zurück zum Strahlungsdetektor geführt während der andere Anteil wenigstens ein optisches Verzögerungselement bzw. eine Verzögerungsstrecke 3 durchläuft, durch die einer der Strahlungsanteile gegenüber dem anderen Strahlungsanteil zeitlich so verzögert wird, dass die resultierende Verzögerung einer doppelten Laufzeit der Messstrahlung zu einer ausserhalb der Kohärenzlänge liegenden Distanz entspricht. Im Idealfall wird diese Distanz der zu vermessenden Entfernung zur Oberfläche des Werkstückes oder zu einem anderen Ziel entsprechen, kann aber auch hiervon abweichen. Erfindungsgemäss wird die Verzögerungsstrecke 3 jedoch so ausgelegt, dass die zeitliche Verzögerung zu einer Distanz korrespondiert, die innerhalb eines Entfernungsbereichs liegt, der zumindest teilweise auch mögliche Messdistanzen enthält, die grösser als die Kohärenzlänge sind. Erfindungsgemäss kann auch die untere Grenze des Distanzbereichs bereits ausserhalb der Kohärenzlänge liegen.

Somit wird erfindungsgemäss zu dem durchgestimmten Strahlungsfeld des Stands der Technik ein zweites Strahlungsfeld hinzugefügt, das gegenüber diesem verzögert ist. Auf dem Strahlungsdetektor werden beide Strahlungsfelder wieder überlagert, wobei das eine über die Verzögerungsstrecke geführt wurde. Anstelle des einen Signals der Anordnung des Stands der Technik werden nunmehr zwei Signale erzeugt, welche gegenseitig entsprechend der Verzögerungsstrecke verschoben sind und die sich im Messinterferometer ausbreiten.

Im Idealfall können beide durchlaufene Strecken, d.h. optische Länge der Verzögerungsstrecke und doppelte Distanz zum Ziel, identisch sein, so dass eine Synchronisierung der Strahlungsfelder auf dem Detektor auftritt. Im Normalfall genügt es jedoch, wenn die durch die Verzögerungsstrecke bewirkte Verzögerung zeitlich hinreichend nahe an der durch die Laufstrecke zum Ziel und wieder zurück verursachte Verzögerung liegt. Das maximale Ausmass der Differenz bzw. die notwendige zeitliche Nähe wird durch den Messbereich der Anordnung vorgegeben, d.h. die Messanordnung kann noch die Laufzeitdifferenzen bzw. optische Weglängendifferenzen bei der Messung verarbeiten, die innerhalb des Messbereichs liegen. Hierbei ist der Messbereich eine Funktion der Kohärenzlänge. Erfindungsgemäss wird somit der bereits in Anordnungen des Stands der Technik bestehende Messbereich in Richtung auf das Ziel verschoben, so dass ein anderer, zielseitig verlagerter Arbeitspunkt resultiert. Das maximale Ausmass der Verschiebung ist dabei im Prinzip nur durch die maximal realisierbare zeitliche Verzögerungsmöglichkeit, d.h. im Normalfall die optische Länge der Verzögerungsstrecke begrenzt. Letztlich wird durch die Verzögerungsstrecke die durch die Zielmessung bewirkte Verzögerung gegenüber dem in der Referenzstrecke des Referenzinterferometers als lokalem Oszillator laufenden Signal verringert, so dass eine im Vergleich zur unverzögerten Anordnung kleinere effektive Messdistanz resultiert. Die Bedingungen des Empfangs auf dem Strahlungsdetektor und somit das verwendete interferometrische Messprinzip mit seinem durch die Kohärenzlänge vorgegebenen Beschränkungen des Messbereichs bleiben somit grundsätzlich erhalten. Allerdings wird die Lage des Messbereichs im Raum verschoben, so dass bei unveränderten Kohärenzlänge und zielbedingten relativen Verhältnissen der Interferometer deren maximale Messdistanz um die Verzögerungsstrecke verändert wird.

In Fig.2 erfolgt die Darstellung eines ersten Ausführungsbeispiels einer Verzögerungsstrecke 3 mit fixer Länge für die erfindungsgemässe Entfernungsmessanordnung, wobei die optische Verzögerungsstrecke 3 in Mach-Zehnder-Konfiguration ausgebildet ist. Das von der Laserquelle 1 erzeugte Strahlungsfeld wird über einen Kollimator 4 geführt und durch einen ersten polarisierenden Strahlteiler 2' in zwei unterschiedlich polarisierte Strahlungsanteile aufteilt, wobei die optische Verbindung zwischen Laserquelle 1, Kollimator 4 und erstem Strahlteiler 2' bevorzugt in Faserbauweise mit einer polarisationserhaltenden Faser ausgeführt ist. In diesem Ausführungsbeispiel in Mach-Zehnder-Konfiguration wird ein $\pi$-polarisierter Strahlungsanteil 5 direkt weitergeführt, wohingegen der $\sigma$-polarisierte Strahlungsanteil 6 über das Interferometer mit einer Armlänge von ca. 10 cm und ein Umkehrprisma 8 geführt und schliesslich mit dem anderen Strahlungsanteil wieder kombiniert wird.

Als eine mögliche Ausgestaltungsvariante ist es vorteilhaft, eine Laserquelle 1 zu verwenden, die in einer Polarisationsmode emittiert, so dass zusammen mit der Verwendung einer polarisationserhaltenden Faser als Verbindung eine Einkopplung unter 45° in das Interferometer möglich ist, was wiederum eine gleichmässige Aufteilung in die beiden unterschiedlich polarisierten Strahlungsanteile ermöglicht. Alternativ oder ergänzend kann jedoch auch ein der Verzögerungsstrecke 3 vorgeschalteter Polarisations-Controller verwendet werden. Beide Strahlungsanteile 5 und 6 werden in einem zweiten polarisierenden Strahlteiler 2" wieder zusammen und über einen 45° Polarisator und einen Kollimator 4 weitergeführt, wobei auch hier die Verbindungen wiederum in Faserbauweise ausgeführt sein können. Um eine ausreichende Stabilität der Interferometer-Anordnung zu erreichen, können deren Wände 7 in Zerodur ausgeführt werden.

Die Wirkung der erfindungsgemässen optischen Verzögerungseinheit wird in Fig.3 erläutert, wobei die Feldstärke gegenüber der Zeit, d.h. in der Zeitdomäne, dargestellt wird. Die Laserquelle erzeugt ein Strahlungsfeld, dass in zwei Strahlungsanteile aufgeteilt wird, wobei $E(\nu,t)$ den unverzögerten Anteil und $E(\nu,t-\tau)$ den um $\tau=2\Delta L/C$ verzögerten Strahlungsanteil bezeichnen. Hierbei entspricht $\Delta L$ der Länge jeweils eines der beiden Arme des Mach-Zehnder-Interferometers der Verzögerungsstrecke und c der Lichtgeschwindigkeit. Beide Strahlungsanteile $E(\nu,t)$ und $E(\nu,t-\tau)$ propagieren dann gemeinsam und zeitversetzt durch die interferometrische Messanordnung.

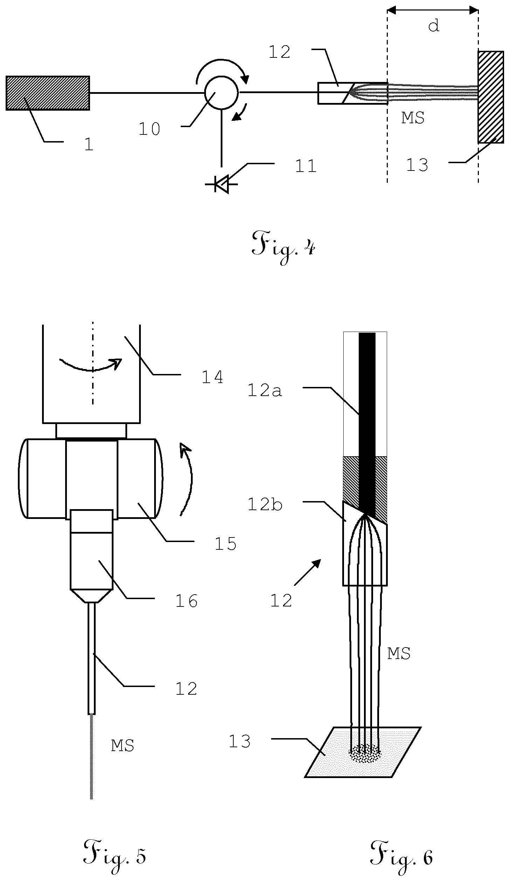

Fig.4 zeigt die schematische Darstellung der interferometrischen Messanordnung in einem Messgerät des Stands der Technik zur Vermessung von Oberflächen, wie es bspw. aus der WO 2009/036861 A1 bekannt ist. Eine solche Anordnung verwendet eine frequenzmodulierte Laserquelle 1 zur Erzeugung wenigstens eines Laserstrahls und einen Strahlungsdetektor 11 zum Empfang der von einer Oberfläche 13 zurückgestreuten Messstrahlung MS. Die frequenzmodulierte Laserquelle ist dabei vorzugsweise so ausgelegt, z.B. als Faserringlaser, dass sie eine Kohärenzlänge von mehr als 1 mm, insbesondere im Bereich von 1 Millimeter bis 20 Zentimeter aufweist, z.B. eine zentrale Wellenlänge zwischen 1,3 und 1,55 $\mu$m und einen durchstimmbaren Wellenlängenbereich von mehr als 40 nm bei einer dynamischen Linienbreite von unter 0,02 nm bei einer Kohärenzlänge von 60 mm oder mehr besitzt. Es handelt sich also bei der frequenzmodulierten Laserquelle 1 um eine Laserquelle, mit welcher innerhalb des Wellenlängenbereichs in seiner Wellenlänge durchstimmbares Licht, also in seiner Lichtfrequenz frequenzmoduliertes bzw. in seiner Lichtfarbe durchstimmbares Licht, emittierbar ist. Die Kohärenzlänge erlaubt somit auch Messungen über eine Tiefen- bzw. Entfernungsbereich von einigen Zentimetern.

Die vorliegende Erfindung betrifft also wellenlängendurchgestimmte Interferometrie. Es wird ein interferometrisches Messprinzip mit hinsichtlich der Wellenlänge modulierter, d.h. mit veränderlicher Wellenlänge emittierender Laserquelle 1 angewandt, wobei die Messungen in der Frequenzdomäne erfolgen. Hierbei wird die von einer Laserquelle 1, z.B. einer Laserdiode erzeugte Laserstrahlung moduliert, indem zum Beispiel eine Wellenlängenrampe durchlaufen und somit die Strahlung in ihrer Emissionsfrequenz verändert wird.

Eine derartige Wellenlängenrampe kann hierbei als klassische Rampe, d.h. mit einer im wesentlichen linear ansteigenden oder abfallenden Folge von zu durchlaufenden Wellenlängen ausgebildet sein. Alternativ kann aber die Menge der unterschiedlichen Wellenlängen auch wahlfrei aufmoduliert werden, d.h. in einer von der linear gereihten Folge abweichenden Weise, solange nur die Menge der Wellenlängen während eines Hubs der Rampe einmal erfaßt und aufmoduliert wird. Der Begriff der Wellenlängenrampe umfasst somit im weiteren Sinn eine Menge von unterschiedlichen Wellenlängen, die zwar in eine auf- oder absteigende Abfolge gebracht werden können, nicht aber notwendigerweise in dieser Abfolge durchlaufen und aufmoduliert werden. Allerdings wird eine bevorzugte Ausführungsform mit einer Folge von abwechselnd auf- und abfallenden linearen Rampen ausgebildet.

Die von der Laserquelle 1 erzeugte Laserstrahlung wird über einen optischen Koppler 10 in den zur Messung verwendeten Interferometeraufbau, der in Common-Path-Geometrie ausgebildet ist, also einen teilweise gemeinsamen Interferometer-Strahlgang für Mess- und Referenzinterferometerarm aufweist, eingekoppelt. Das in seiner Frequenz modulierte Licht aus der durchstimmbaren Laserquelle 1, welches am Eingang der Verzögerungstrecke 3 anliegt, ist also in seiner Wellenlänge moduliert. Der Referenzinterferometerarm wird hierbei durch einen Reflex an der optischen Austrittsfläche einer Gradientenindex-Linse definiert, so dass eine konstante, insbesondere bekannte Distanz festgelegt ist, wobei weitere Rückreflektionen vermieden werden. Damit liegt die Referenzfläche in einer die Komponenten der Sende- und Empfangsoptik integrierende Sende-/Empfangsoptik 12 innerhalb der zum Emittieren des Laserstrahls verwendeten Strahlformungsoptik. Der Messinterferometerarm wird hingegen durch die Reflektion an der zu vermessenden Oberfläche 13 definiert. Das rückreflektierte Licht von Mess- und Referenzinterferometerarm wird schliesslich über den optischen Koppler 10 wieder auf den Strahlungsdetektor 11 geführt, der vorzugsweise als InGaAs-Detektor mit einer Bandbreite von mehr als 100 MHz ausgebildet ist. In einer Auswerteeinheit kann schliesslich die zu messende Distanz $\Delta L$ bestimmt werden.

Zusätzlich kann auch ein hier nicht dargestelltes Kalibrierinterferometer mit einem optischen Detektor 5 zur Berücksichtigung bzw. Kompensation von Nichtlinearitäten im Durchstimmverhalten verwendet werden, wobei dieses Kalibrierinterferometer insbesondere in Etalon- oder Mach-Zehnder-Konfiguration ausgeführt sein kann.

Eine solche Messanordnung kann bspw. in einen Probenkopf eines Koordinatenmessgerätes zur abtastenden Vermessung integriert sein, wie es bspw. aus der WO 2009/036861 A1 bekannt ist. In der Fig.5 wird der strukturellen Aufbau eines solchen Probenkopfs für ein ebensolches Messgerät veranschaulicht. Das Koordinatenmessgerät weist hierbei Führungsmitteln zur definiert abtastenden Führung des Probenkopfes über die zu vermessende Oberfläche und der Probenkopf wenigstens einen Emissions- und Empfangsstrahlgang zur Emission der Messstrahlung MS der interferometrischen Entfernungsmessanordnung auf.

Der Probenkopf wird durch ein Armelement 14 und ein Gelenk 15 als Führungsmittel definiert abtastend über die zu vermessende Oberfläche geführt, wobei auch eine Rotation des Gelenks 15 gegenüber dem Armelement 14 möglich ist. Durch die Rotierbarkeit gegenüber dem Armelement 14 und das nachfolgende Gelenk 15 kann der Probenkopf gewinkelten oder stark veränderlichen Oberflächenverläufen gut folgen. Grundsätzlich können jedoch noch weitere rotatorische oder translatorische Freiheitsgrade in die Führungsmittel integriert werden, um eine weiter verbesserte Führung des Probenkopfes zu ermöglichen.

Der Probenkopf weist wenigstens einen oberflächenseitigen Emissions- und Empfangsstrahlengang des Messstrahls MS auf. In dieser Ausführungsform werden die Strahlengänge durch eine dünne Röhre geführt, welche die Sende-/Empfangsoptik 12 beinhaltet. Im an diese Röhre anschliessenden dickeren Teil 16 kann bereits der Strahlungsdetektor selbst oder aber Lichtleiter zur Weiterleitung an einen andernorts integrierten Strahlungsdetektor angeordnet sein. Der Probenkopf wird durch die Führungsmittel so gesteuert, dass die Bedingung eines im wesentlichen senkrechten Auftreffens des Laserstrahls auf die Oberfläche eingehalten wird, insbesondere eine Abweichung von +/- 5° zur Flächennormalen nicht überschritten wird. Dabei kann der Probenkopf so bewegt werden, dass dieser kontinuierlich mit relativ zur Oberflächentangente konstanter Ausrichtung verfahren wird, insbesondere mit senkrecht zur Oberflächentangente orientiertem Emissions- und Empfangsstrahlgang.

Fig.6 zeigt schematisch die Integration von Sende-/Empfangsoptik 12 in die Röhre des Probenkopfes. In dieser Ausgestaltung dient eine Faser 12a zur Führung der zu emittierenden wie auch der reflektierten Messstrahlung MS. Die Emission erfolgt hierbei durch eine in dem röhrenförmigen Teil angeordnete Gradientenindex-Linse 12b, die die Messstrahlung auf die zu vermessende Oberfläche 13 emittiert und die von dort reflektierte Messstrahlung MS wieder in die Faser 12a einkoppelt.

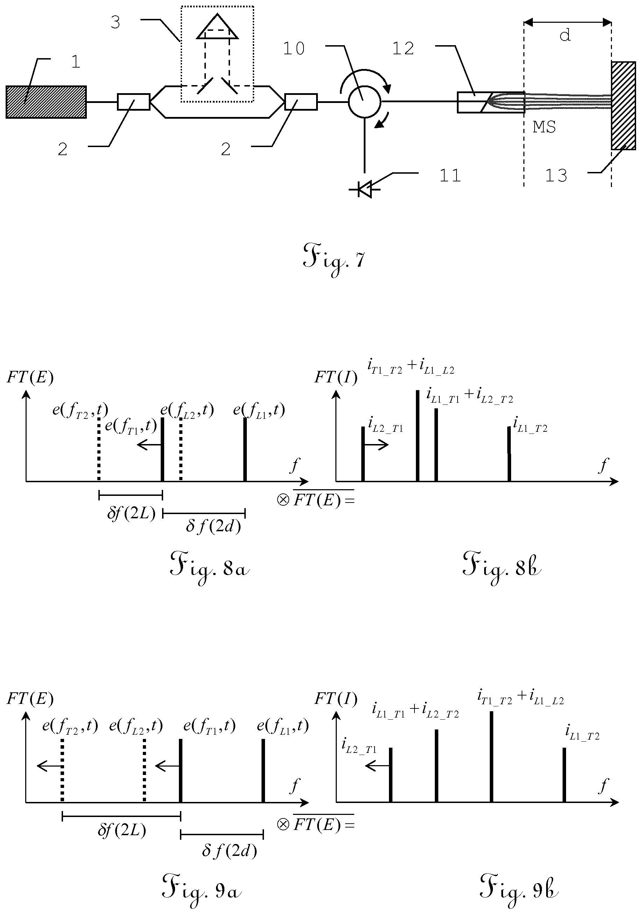

Fig.7 zeigt die Integration einer Verzögerungsstrecke in die Anordnung aus Fig.4 zur Realisierung eines ersten Ausführungsbeispiels der erfindungsgemässen interferometrischen Messanordnung. Hinter die Laserquelle 1 und einen ersten Strahlteiler 2 für die Messstrahlung, der diese in zwei Strahlungsanteile aufteilt wird wenigstens eine optische Verzögerungstrecke 3 eingefügt, durch die einer der Strahlungsanteile gegenüber dem anderen Strahlungsanteil zeitlich so verzögerbar ist, dass die erzeugbare Verzögerung einer doppelten Laufzeit der Messstrahlung MS zu einer ausserhalb der Kohärenzlänge liegenden Distanz entspricht, wobei diese der zu messende Distanz d zur Oberfläche des Ziels 13 entsprechen kann. Durch die erfindungsgemässe Verwendung der Verzögerungsstrecke 3 können nun auch Messungen zu Zielen durchgeführt werden, deren Abstand zur Messanordnung ausserhalb der durch die Kohärenzlänge gesetzten Grenzen, insbesondere aber grösser als die Kohärenzlänge ist.

In diesem ersten Ausführungsbeispiel ist die Verzögerungsstrecke 3 im Strahlgang vor der Sende-/Empfangsoptik 12 angeordnet, so dass das Verzögern vor dem Emittieren erfolgt.

Auch dieses erste Ausführungsbeispiel kann in der interferometrischen Entfernungsmessanordnung ein weiteres Interferometer als Kalibrierinterferometer aufweisen, wobei dieses auch in Etalon- oder Mach-Zehnder-Konfiguration ausgeführt sein kann.

Die Fig.8a-b und Fig.9a-b veranschaulichen die Strahlungsfelder in der Frequenzdomäne für ein erstes und ein zweites Beispiel der Länge der Verzögerungsstrecke in der Anordnung des ersten Ausführungsbeispiels.

Fig.8a-b zeigt die graphische Darstellung in der Frequenzdomäne für ein erstes Beispiel, wobei durch die Verwendung von Mess- und Referenzinterferometerarm und durch die zwei Strahlungsanteile insgesamt vier Strahlungsfelder erzeugt werden, welche beim interferometrischen Entfernungsmessen auf dem Strahlungsdetektor überlagert werden.

Die Reflexe des Referenzarms als lokalem Oszillator und des Ziels im Messarm sind gegeneinander um die Laufzeit über die Zieldistanz d verzögert. Da zwei Strahlungsanteile in die interferometrische Messanordnung mit dem Referenz- und dem Messarm eingekoppelt werden, resultieren somit insgesamt vier auf dem Strahlungsdetektor interferierende Strahlungsfelder, wobei in den Figuren die nichtverzögerten Strahlungsfelder mit 1 und die verzögerten Strahlungsfelder mit 2 sowie mit L für den lokalen Oszillator (Referenzarm) und mit T für das Target (Messarm) indiziert werden. Aufgrund der Frequenzmodulation der Laserstrahlung entspricht hierbei ein zeitlicher Abstand bzw. eine Laufstreckendifferenz auch einer spektralen Differenz $\delta f$.

Die detektierte Intensität I ist ein Produkt der Strahlungsfelder in der Zeit- oder Frequenzdomäne, die Fourier-Transformation FT der Intensität I ist eine Faltung der Fourier-Transformation FT der Felder E.

$$I = \left| E \right|^2 = E(t) \cdot \overline{E(t)}$$

$$FT(I) = FT(E) \otimes \overline{FT(E)}$$

mit

$$E(t) = E_{L1}(t) + E_{L2}(t - \tau_{MZ}) + E_{T1}(t - \tau_T) + E_{T2}(t - \tau_T - \tau_{MZ})$$

Hierbei bezeichnen $E_{L1}(t)$ den nicht verzögerten und nur über die Referenzstrecke gelaufenen Strahlungsanteil, $E_{L2}(t-\tau_{MZ})$ den verzögerten und nur über die Referenzstrecke gelaufenen Strahlungsanteil, $E_{T1}(t-\tau_T)$ den nicht verzögerten und über die Zieldistanz gelaufenen Strahlungsanteil und schliesslich $E_{T2}(t-\tau_T-\tau_{MZ})$ den sowohl verzögerten als auch über die Zieldistanz gelaufenen Strahlungsanteil. Hierbei stellt $\tau_{MZ}$ die Laufzeit der über die Verzögerungsstrecke geführten Strahlungsanteile und $\tau_T$ die Laufzeit der über die Zieldistanz gelaufenen Strahlungsanteile dar. Die spektralen Abstände $\delta f(2L)$ und $\delta f(2d)$ sind dabei als Funktionen der optischen Pfaddifferenzen L und d darstellbar.

In der graphischen Darstellung in der Frequenzdomäne der Fig.8a ergeben sich somit vier Frequenzen der vier Strahlungsanteile bzw. Strahlungsfelder, aus denen nach der Faltung die vier in Fig.8b gezeigten Schwebungsfrequenzen folgen. Hierbei interferiert das verzögerte Strahlungsfeld mit dem nicht verzögerten Feld, so dass eine durch den Pfeil in Fig.8a angedeutete Vergrösserung der Zieldistanz bzw. des korrespondierenden spektralen Abstands $\delta f(2d)$ zu einer Veränderung der Frequenz $e(f_{T1},t)$ und damit zu der in Fig.8b gezeigten Verschiebung der Schwebungsfrequenz $i_{L2\_T1}$ führt.

Für eine Frequenzmodulation mit einem Anstieg der optischen Frequenz f besitzt der erste unverzögerte Reflex die höchste Frequenz $e(f_{L1},t)$ zur Zeit t. Nach der Faltung weist der Interferenzterm der beiden L-Felder die höchste Intensität auf, wird aber aufgrund deren Lage ausserhalb des Kohärenzbereichs unterdrückt. Die niedrigste Schwebungsfrequenzkomponente $i_{L2\_T1}$ der Interferenz der Strahlungsfelder $e(f_{T1},t)$ und $e(f_{L2},t)$ stellt hingegen das gewünschte Nutzsignal dar.

Fig.9a-b zeigt die graphische Darstellung in der Frequenzdomäne für ein zweites Beispiel der Strahlungsfelder für das erste Ausführungsbeispiel, bei dem die durch die Verzögerungskomponente bewirkte Verzögerung grösser gewählt wird als die Laufzeit über die Zielstrecke bzw. grösser als die doppelte Laufzeit der Messstrahlung zu der zu vermessenden Oberfläche ist.

In diesem Fall führt die in Fig.9a gezeigte Vergrösserung der Zieldistanz d bzw. des korrespondierenden spektralen Abstands $\delta f(2d)$ zu einer Verringerung der Schwebungsfrequenz für $i_{L2\_T1}$ in Fig.9b. Eine solche Verschiebung kann Vorteile bieten, da hierbei auch die Schwebungen $i_{L1\_T2}$ und $i_{T1\_T2} + i_{L1\_L2}$ zu höheren Frequenzen verschoben sind und somit kohärenzbedingt stärker unterdrückt werden können.

Allgemein werden durch Verschieben des Arbeitsbereichs ausserhalb der normalen Kohärenzlänge beide Seiten der Kohärenzlänge mit Ausnahme einer Gleichstromregion nutzbar. Allerdings geht die Eindeutigkeit verloren und es muss Sorge getragen werden, dass die richtige Seite der Arbeitsdistanz gewählt wird.

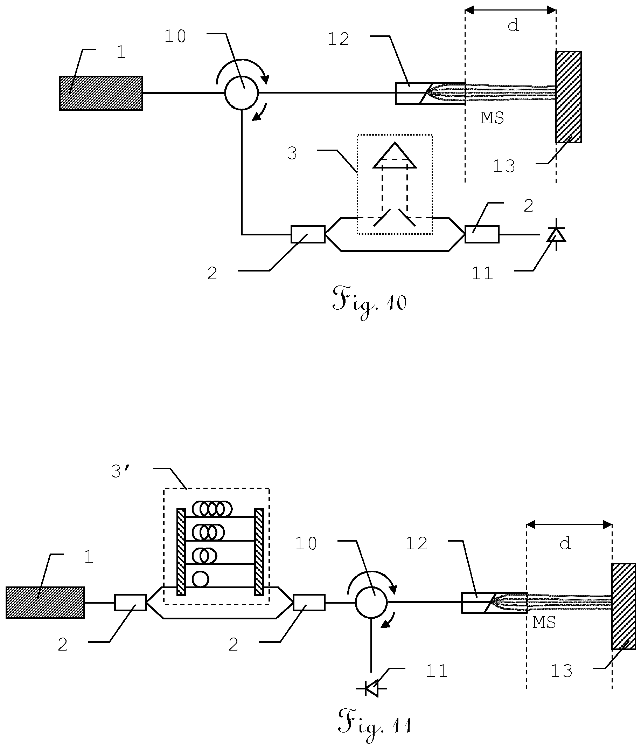

Fig.10 zeigt die schematische Darstellung eines zweiten Ausführungsbeispiels der erfindungsgemässen interferometrischen Messanordnung, bei der bei dem in eine Anordnung gem. Fig.4 die Verzögerungsstrecke 3 im Strahlgang nach der integrierten Sende-/Empfangsoptik 12 eingefügt ist, so dass das Aufteilen in die Strahlungsanteile mit Verzögern eines der Teile erst nach dem Empfangen und unmittelbar vor dem Strahlungsdetektor 11 erfolgt. Erfindungsgemäss kann die gesamte Verzögerung jedoch auch durch verschiedene Teilverzögerungsstrecken bewirkt werden, die auch an verschiedenen Stellen des Strahlgangs angeordnet sein können, sofern sich für einen Strahlungsanteil die gewünschte Gesamtverzögerung bzw. optische Pfaddifferenz ergibt.

Ein Ausführungsbeispiel einer nicht beanspruchten interferometrischen Messanordnung wird in Fig.11 schematisch dargestellt. Während in den erfindungsgemässen Ausführungsbeispielen feste Verzögerungsstrecken einer definierten Länge verwendet werden, wird in diesem Fall bei ansonsten zum ersten Ausführungsbeispiel gem. Fig.7 unverändertem Aufbau eine umschaltbare Zahl von Verzögerungsstrecken unterschiedlicher Länge verwendet, so dass eine Mehrzahl von auswählbaren diskreten Verzögerungszeiten bereitgestellt wird. Von Vorteil bei der Kalibrierung der einzelnen Verzögerungsstrecken kann ein gewisser Überlapp zwischen den Verzögerungsstrecken in Verbindung mit der möglichen Kohärenzlänge sein. Hierbei ist der Längenunterschied zwischen den Verzögerungsstrecken etwas kleiner als die Kohärenzlänge, wodurch es zu einem Messbereichüberlapp kommt. Beim Verlassen des einen Bereichs gelangt man durch Umschalten auf die nächste Verzögerungslänge auch in den nächsten Bereich. Die gleiche Distanz kann dann mit zwei Verzögerungsstrecken gemessen werden, was eine Übernahme einer Distanzkalibration erlaubt. Die Verzögerungsstrecken können hierbei als Fasern ausgebildet sein, wie sie als Standardkomponenten für Anwendungen der optischen Kohärenztomographie erhältlich sind. So bieten bspw. die Hersteller General Photonics, Newport, OZoptics und Santec als Standardprodukt fasergekoppelte optische Verzögerungsstrecken mit Verzögerungszeiten von bis zu 350 ps bzw. einer Länge von 110 mm an.

Alternativ zu umschaltbaren Verzögerungsstrecken können auch kontinuierlich oder diskret verstellbare Varianten von Verzögerungsstrecken, bspw. Interferometer mit verstellbaren Armlängen, zum Einsatz kommen.

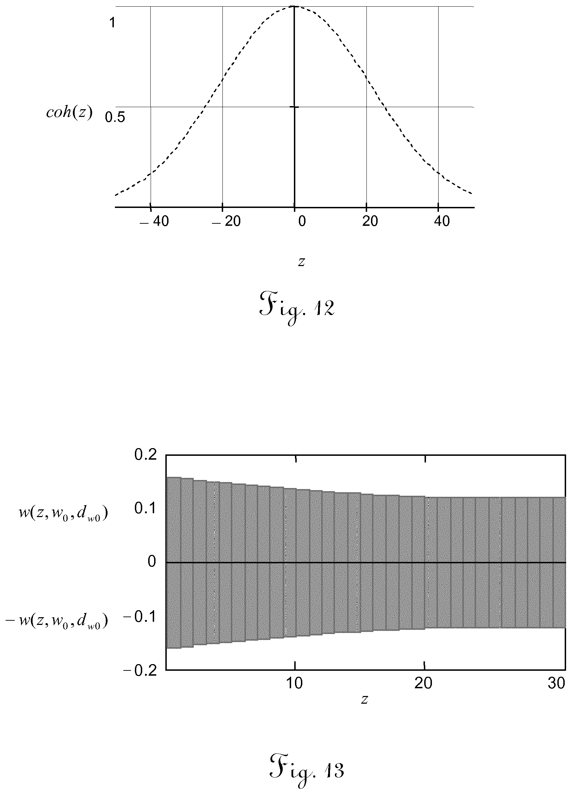

Die Wirkung einer Verzögerungsstrecke auf Messungen wird in den nachfolgenden Figuren 12 bis 19 anhand von einfachen Simulationsergebnissen veranschaulicht. Hierbei zeigt

Fig.12 die Darstellung einer Kohärenzkurve für die nachfolgenden Simulationen, welche Signalstärken und Kohärenzeffekte veranschaulichen. Die zugrundeliegende Kohärenzkurve ist dabei wie folgt definiert

$$coh(z) = e^{-\left(\frac{2z\cdot\sqrt{\ln(2)}}{L_{coh}}\right)^2}$$

mit z als optischer Pfaddifferenz und einer Kohärenzlänge von $L_{coh} := 50mm$.

Für die Simulationen gelten die folgenden Definitionen und Beziehungen

Zeitliche Verzögerung:
$$\tau(d) := \frac{2d}{c}$$

Phase: $\phi(t,\tau) := \pi\cdot\nu(t-\tau)\cdot(t-\tau)$
Laser-Amplitude: $E_{Laser\_0} := 1$
Laser-Feld: $E_{Laser}(t,d) := E_{Laser\_0}\cdot e^{i\cdot\phi(t,\tau(d))}$

Lokaler Oszillator

- Länge: $d_L := 0_m$
- Reflektivität: $R := 1\%$
- Oszillator-Laser-Feld:
$$E_L(t) := E_{Laser}(t,d_L)\cdot\sqrt{R}$$

Ziel-Laser-Feld:
$$E_T(t) := E_{Laser}(t,d_T)\cdot\sqrt{R\cdot L}$$

Strahlungsdetektor-Feld: $E := (E_L(t) + E_T(t))$

Fig.13 zeigt den Strahlquerschnitt für ein erstes Simulationsbeispiel einer Entfernungsmessanordnung des Stands der Technik ohne Verzögerungsstrecke.

Die Parameter für dieses Beispiel mit einer Zieldistanz von 30 mm und einer daraus resultierenden optischen Pfaddifferenz von 60 mm lauten wie folgt:

Strahltaille: $w_0 := 120 \mu m$

Distanz bis zur Strahltaille: $d_{w0} := 25mm$

Numerische Apertur:

$$NA := \frac{w_0}{z_0(w_0)} = 0{,}00411$$

Austrittspupille: $D := w(0, w_0, d_{w0}) \cdot 2 = 0{,}316mm$

Rayleigh-Länge: $z_0(w_0) = 29{,}2mm$

Zielverlust: $RL := NA^2 \cdot Albedo$

und einem aus dem Zielverlust resultierenden Leistungspegel von -58 dBm, wobei die Albedo einer als Ziel angenommenen dunklen Metalloberfläche mit 10% angesetzt wird. Distanz z (horizontal) und Strahlquerschnitt (vertikal) sind jeweils in Millimeter angegeben.

Der Einfachheit halber wird zur Veranschaulichung des Kohärenzeinflusses dieser als Modulationsverlust im Fourier-Raum angewendet, d.h. die Fouriertransformierte $P'=FT(p)$ der detektierten Leistung $p=(E\cdot\overline{E})$ wird mit der Kohärenzfunktion multipliziert $P=P'\cdot coh$. Die Distanz d bzw. die optische Pfaddifferenz ($OPD_T \approx 2 \cdot d$ in Luft) korrespondiert

$$OPD_T = \frac{c \cdot f}{\gamma}$$

zur Frequenz f über die Beziehung     mit der spektralen Durchstimmrate $\gamma$ des Lasers von

$$\gamma = 20 \frac{THZ}{ms} \ .$$

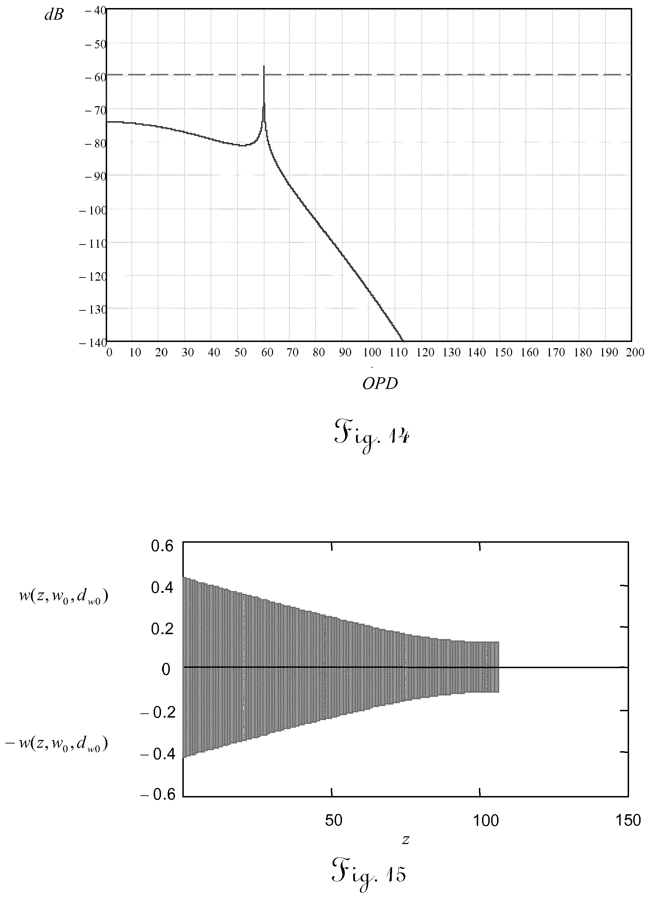

Das zugehörige Tomogramm des empfangenen Signals für das erste Simulationsbeispiel wird in Fig.14 dargestellt, wobei der Leistungspegel in dB gegen die in Millimetern angegebene optische Pfaddifferenz d aufgetragen ist. In der Realität wird ab einer Distanz von 30 mm aufgrund von Kohärenzverlusten und Rauschen die Detektionsgrenze erreicht. Deshalb sollte in der diese Einflüsse nicht berücksichtigenden Simulation die benötigte Signalstärke oberhalb der gestrichelt dargestellten Schwelle von -60 dB liegen, so dass die in der Realität herrschenden Bedingungen berücksichtigt werden können.

Wie in der Abbildung zu erkennen ist, erreicht die durchgezogen gezeichnete Signalstärke ohne erfindungsgemässe Verzögerung bei einer optischen Pfaddifferenz von 60 mm bzw. einer Zieldistanz von 30 mm ihr Maximum und liegt damit leicht oberhalb der Sensitivität von ca. -60 dB.

Fig.15 zeigt die Darstellung des Strahlquerschnitts für ein zweites Simulationsbeispiel. Nunmehr beträgt die Zieldistanz 10 cm, so dass eine optische Pfaddifferenz (OPD) von 200 mm folgt. Die numerische Apertur entspricht dem ersten Simulationsbeispiel aus Fig.13. Die Distanz zur Strahltaille beträgt 100 mm, so dass die Austrittspupille einen Durchmesser von 0,857 mm hat.

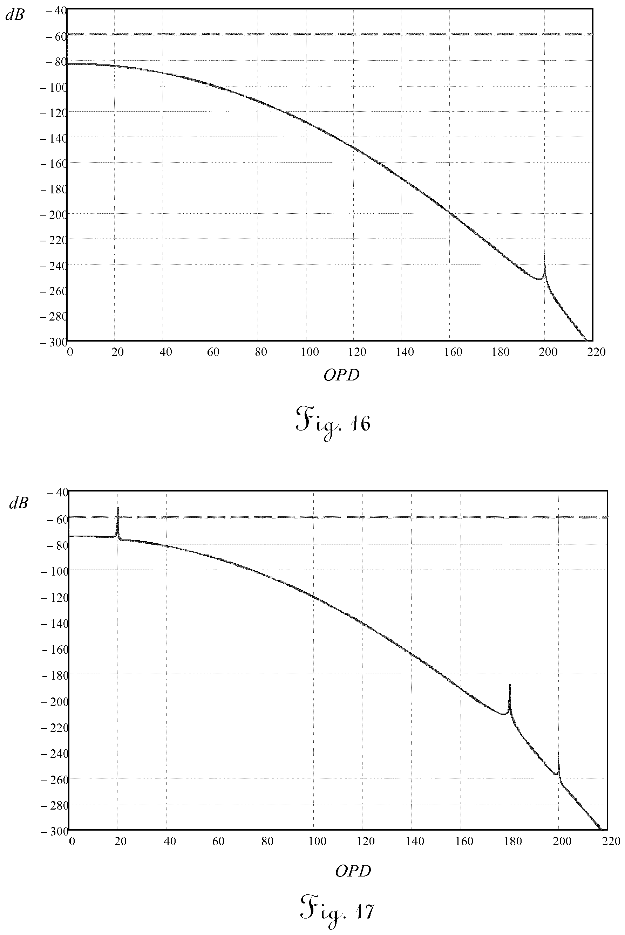

Wie aus dem in Fig.16 dargestellten zugehörigen Tomogramm des empfangenen Signals zu erkennen ist, liegt das Maximum der Signalstärke deutlich unter der für realistische Verhältnisse anzusetzenden Schwelle von -60 dB und ist somit weit jenseits einer Detektierbarkeit.

Demgegenüber stehen die Ergebnisse einer Simulation mit erfindungsgemässer Einführung einer Verzögerung, wie sie in Fig.17 für das zweite Simulationsbeispiel dargestellt werden.

Bei der Wahl der optischen Pfaddifferenz der Verzögerungsstrecke $OPD_{MZ}$ wird durch die Kohärenzlänge des Lasers ein möglicher Bereich vorgegeben. Für eine gute Signalauswertung ohne Verzögerung sollte die Distanz bzw. deren $OPD_T$ im Bereich der Kohärenzlänge liegen:

$$0 < OPD_T < L_{coh}$$

Bei Verwendung einer Verzögerungstrecke verschiebt sich dieser Bereich um die $OPD_{MZ}$ dieser Strecke:

$$OPD_{MZ} < OPD_T < L_{coh} + OPD_{MZ}$$

Die minimale Verzögerungsstrecke ist dabei

$$OPD_{MZ\,\min} = OPD_T - L_{coh} \text{ ,}$$

und die maximale ist

$$OPD_{MZ\,\max} = OPD_T \text{ ,}$$

so dass sich für die Wahl der Länge der Verzögerungsstrecke der mögliche Bereich von

$$OPD_{MZ\,\min} < OPD_{MZ} < OPD_{MZ\,\max}$$

$$OPD_T - L_{coh} < OPD_{MZ} < OPD_T$$

ergibt.

In diesem auch durch die Fig.8 beschriebenen Fall führt eine Vergrößerung der Zieldistanz zu einer Vergrößerung der gemessenen Schwebungsfrequenz, was dem sogenannten "normalen" Messbereich entspricht. Möglich ist auch die Nutzung des anderen Bereichs, entsprechend Fig. 9, bei dem die Verzögerungsstrecke größer ist als die OPD der Distanz und die Vergrößerung der Zieldistanz zu einem Abnehmen der Schwebungsfrequenz führt, dem sogenannten "inversen" Messbereich:

$$OPD_T < OPD_{MZ} < OPD_T + L_{coh}$$

Sofern die Eindeutigkeit des Messbereichs - normal oder inverse - beispielsweise durch ein Verfahren des Ziels bestimmbar ist, kann die Verzögerungsdistanz in beiden Bereichen liegen:

$$OPD_T - L_{coh} < OPD_{MZ} < OPD_T + L_{coh}$$

In dem vorher genannten Beispiel mit

$$d = 100\,mm \rightarrow OPD_T = 200\,mm \text{ und } L_{coh} = 50\,mm \text{ ,}$$

und der Beschränkung auf den normalen Messbereich, muss die Verzögerungsstrecke im Bereich

$$150\,mm < OPD_{MZ} < 200\,mm$$

liegen.

Bei Verwendung einer Verzögerungsstrecke besteht das Laser-Feld aus zwei Termen, wobei diese gegenseitig verzögert sind und $d_{MZ}$ die Länge der erfindungsgemässen Verzögerungsstrecke bezeichnet (in Luft gilt

$$d_{MZ} \approx \frac{OPD_{MZ}}{2}\text{ )}$$

$$E_{Laser}(t,d) := \frac{1}{4} E_{Laser\_0} \cdot e^{i\cdot\phi(t,\tau(d))} + \frac{1}{4} E_{Laser\_0} \cdot e^{i\cdot\phi(t,\tau(d+d_{MZ}))}$$

Die durch die Aufteilung und Zusammenführung des Strahlungsfeldes erzeugten Verluste werden durch den Faktor ¼ berücksichtigt. Wiederum beträgt die Zieldistanz 10 cm und somit die optische Pfaddifferenz (OPD$_T$) 200 mm.

Zur Bewirkung einer Verzögerung wird für einen der beiden Strahlungsanteile eine zusätzliche Strecke der Länge von z.B. $d_{MZ}$ = 90 mm (OPD = 180 mm) eingeführt, die innerhalb des möglichen normalen Bereichs liegt.

Im Tomogramm sind nunmehr die Auswirkungen von drei der vier entstehenden Schwebungsfrequenzen identifizierbar. Bei 200 mm ist das normale, dem Ziel zuordenbare Signal erkennbar, wohingegen bei 180 mm das zur Verzögerungsstrecke gehörige Signal auftritt. Bei 20 mm ist das Interferenzsignal von verzögertem lokalen Oszillator- und unverzögertem Messinterferometer-Strahlungsfeld, d.h. des das Ziel umfassenden Interferometerarms, erkennbar.

Das bei 380 mm liegende Interferenzsignal aus verzögertem lokalen Oszillator- und verzögertem Messinterferometer-Strahlungsfeld ist in der Figur aus Gründen der Anschaulichkeit nicht dargestellt.

Das Signal bei 20 mm ist, trotz des zusätzlichen durch die Verzögerungsstrecke bewirkten Verlustes von 6 dB, noch oberhalb der Sensitivitätsschwelle und damit gut detektierbar.

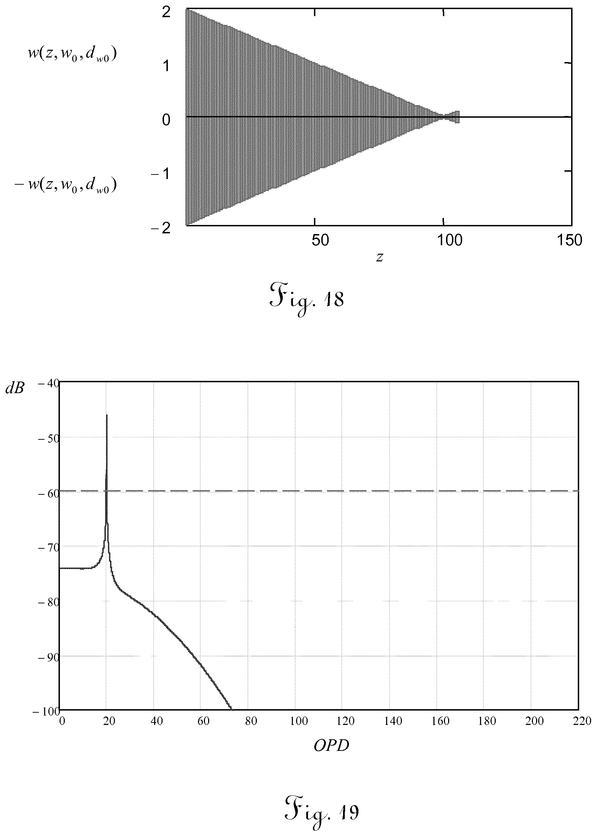

Fig.18 zeigt die Darstellung des Strahlquerschnitts für ein drittes Simulationsbeispiel einer erfindungsgemässen Entfernungsmessanordnung mit einer auf eine Zieldistanz von 100 mm optimierten Optik. Für dieses Simulationsbeispiel gelten folgende Parameter

Strahltaille: $w_0 := 25 \mu m$

Distanz bis zur Strahltaille: $d_{w0} := 100 mm$

Numerische Apertur:
$$NA := \frac{w_0}{z_0(w_0)} = 0,01974$$

Rayleigh-Länge: $z_0(w_0) = 1,267 mm$

Austrittspupille: $D := w(0, w_0, d_{w0}) \cdot 2 = 3,947 mm$

Die Albedo einer als Ziel angenommenen dunklen Metalloberfläche wird in diesem Beispiel mit 10% angesetzt, so dass ein aus dem Zielverlust resultierender Leistungspegel von -44 dBm folgt. Damit kann die numerische Apertur um den Faktor 5 vergrössert und die Verluste um 7 dBm verringert werden, was eine entsprechend höhere Signalstärke bedeutet.

Das zugehörige Tomogramm des empfangenen Signals wird in Fig.19 für das dritte Simulationsbeispiel mit erfindungsgemässer Verzögerung dargestellt. Das deutliche Überschreiten der Detektierbarkeitsschwelle bei 20 mm ist klar zu erkennen.

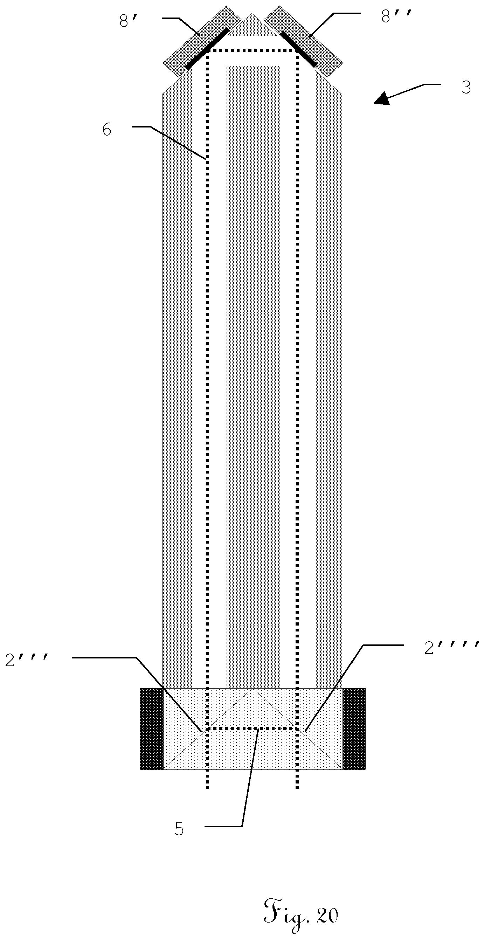

Fig. 20 zeigt eine konkrete Ausführungsform der in Fig. 2 dargestellten Verzögerungstrecke 3. Die Einkopplung erfolgt von unten in einen ersten 50%-Strahlteiler 2'''. Ein erster Strahlungsteil 6 propagiert in ausgebohrten und abgeschlossenen Luftkanälen in einem Zerodurteil 7. Ein zweiter Strahlungsanteil 5 zu einem zweiten 50%-Strahlteiler 2'''', welcher beide Strahlungsanteile 5 und 6 wieder zusammenführt. Die beiden Strahlteiler 2''' und 2'''' können beispielsweise aus $SIO_2$ gefertigt sein und ihre Ein- und Auskoppelflächen können antireflektiv beschichtet sein. Das Umkehrprisma 8 aus Fig. 2 ist dabei mit den dargestellten zwei reflektiv (z.B. mit Gold) beschichteten Zerodurteilen 8' und 8'' ausgeführt.

Über Temperatur ändert sich die Dichte in den Luftkanälen nicht und der optische Weg bleibt konstant. Die Wege innerhalb der Strahlteiler sind für beide Interferometerarme gleich. Somit ist das dargestellte Teil 3 des Mach-Zehnder-Interferometers athermalisch.

**Patentansprüche**

1. Entfernungsmessverfahren zur Vermessung von Oberflächen (13), insbesondere von industriellen Werkstücken, mit wenigstens einem

- Erzeugen eines Laserstrahls, dessen Wellenlänge durch eine Frequenzmodulation einer Laserquelle (1), insbesondere rampenförmig, in einem Wellenlängenbereich durchstimmbar ist, zur Bereitstellung von Messstrahlung (MS) mit einer Kohärenzlänge, insbesondere einer Kohärenzlänge von mehr als 1 Millimeter, vorzugsweise von mehr als 60 Millimetern,

- Emittieren der Messstrahlung (MS) auf die sich innerhalb eines vorgegebenen Distanzbereichs befindende Oberfläche (13),

- Empfangen der von der Oberfläche (13) zurückgestreuten Messstrahlung (MS) und

- interferometrischen Entfernungsmessen von einem Bezugspunkt zur Oberfläche (13) unter Verwendung von einem Mess- und einem Referenzinterferometerarm, insbesondere wobei die Messstrahlung (MS) während eines abtastenden Führens über die zu vermessende Oberfläche (13) emittiert und wieder empfangen wird und beim interferometrischen Entfernungsmessen Mess-und Referenzinterferometerarm einen teilweise gemeinsamen Strahlgang aufweisen, vorzugsweise mit einer den Referenzinterferometerarm definierenden und innerhalb einer zum Emittieren des Laserstrahls verwendeten Strahlformungsoptik liegenden Referenzfläche,
**dadurch gekennzeichnet, dass**

- der vorgegebene Distanzbereich zumindest teilweise, insbesondere vollständig ausserhalb der Kohärenzlänge liegt,
- die Messstrahlung in zwei Strahlungsanteile (5, 6) aufgeteilt wird, wobei einer der Strahlungsanteile (6) mittels einer Verzögerungsstrecke (3,3') gegenüber dem anderen zeitlich so verzögert wird, dass eine hierdurch bewirkte optische Pfaddifferenz der zu einer Entfernung im vorgegebenen Distanzbereich korrespondierenden optischen Pfaddifferenz zu- oder abzüglich der Kohärenzlänge des Lasers entspricht, und wobei die Verzögerungsstrecke (3, 3') zumindest teilweise in Zerodur ausgeführt ist, insbesondere mit in Zerodur ausgeführten Wänden (7), und
- die zwei Strahlungsanteile (5, 6) verkörpert sind durch einen ersten Strahlungsanteil (6) und einen zweiten Strahlungsanteil (5), insbesondere wobei die Messstrahlung durch ein Einkoppeln in einen ersten 50%-Strahlteiler (2',2''') in den ersten Strahlungsanteil (6) und den zweiten Strahlungsanteil (5) aufgeteilt wird,
- wobei der erste Strahlungsanteil (6) in abgeschlossenen Luftkanälen in einem Zerodurteil (7) propagiert, und ein Zusammenführen von dem ersten Strahlungsanteil (6) und dem zweiten Strahlungsanteil (5), insbesondere mit einem zweiten 50%-Strahlteiler (2'',2''''), erfolgt, insbesondere wobei der erste Strahlteiler (2',2'''), der zweiter Strahlteiler (2'',2'''') und das Zerodurteil (7) derart ausgebildet und angeordnet sind, dass der optische Weg in den Luftkanälen temperaturunabhängig konstant ist sowie auch die Wege innerhalb der Strahlteiler (2',2'',2''',2'''') für beide Arme der dabei entstehenden Interferometer-Anordnung gleich sind.

2. Entfernungsmessverfahren nach Anspruch 1,
**dadurch gekennzeichnet, dass**
die durch die Verzögerung bewirkte optische Pfaddifferenz

- höchstens der zur Distanz zu der zu vermessenden Oberfläche (13) korrespondierenden optischen Pfaddifferenz und
- wenigstens der zur Distanz zu der zu vermessenden Oberfläche (13) korrespondierenden optischen Pfaddifferenz abzüglich der Kohärenzlänge des Lasers entspricht,
oder
die durch die Verzögerung bewirkte optische Pfaddifferenz
- wenigstens der zur Distanz zu der zu vermessenden Oberfläche (13) korrespondierenden optischen Pfaddifferenz und
- höchstens der zur Distanz zu der zu vermessenden Oberfläche (13) korrespondierenden optischen Pfaddifferenz zuzüglich der Kohärenzlänge des Lasers entspricht.

3. Entfernungsmessverfahren nach einem der Ansprüche 1 oder 2,
**dadurch gekennzeichnet, dass**
das Verzögern vor dem Emittieren der Messstrahlung (MS) auf die zu vermessenden Oberfläche (13) erfolgt.

4. Entfernungsmessverfahren nach einem der Ansprüche 1 oder 2,
**dadurch gekennzeichnet, dass**
das Verzögern nach dem Empfangen der von der zu vermessenden Oberfläche (13) zurückgestreuten Messstrahlung (MS) erfolgt.

5. Entfernungsmessverfahren nach einem der vorangehenden Ansprüche,
**dadurch gekennzeichnet, dass**
eine Mehrzahl von auswählbaren diskreten Verzögerungszeiten bereitgestellt wird.

6. Interferometrische Entfernungsmessanordnung zur Vermessung von Oberflächen (13), insbesondere von industriellen Werkstücken, mit wenigstens

- einer frequenzmodulierten Laserquelle (1) zur Erzeugung wenigstens eines Laserstrahls, dessen Wellenlänge durch die frequenzmodulierte Laserquelle (1), insbesondere rampenförmig, in einem Wellenlängenbereich durchstimmbar ist, zur Bereitstellung von Messstrahlung (MS) mit einer Kohärenzlänge, insbesondere mit einer Kohärenzlänge von mehr als 1 Millimeter, vorzugsweise von mehr als 60 Millimetern,
- einem optischen Strahlgang mit

○ einer Sendeoptik zum Emittieren der Messstrahlung (MS) auf die Oberfläche,

○ einer Empfangsoptik zum Empfangen der von der Oberfläche zurückgestreuten Messstrahlung (MS), insbesondere einer kombinierten Sende- und Empfangsoptik (12),

○ einem Messinterferometerarm und einem Referenzinterferometerarm, insbesondere mit einem teilweise gemeinsamen Strahlgang von Mess- und Referenzinterferometerarm,

- einem Strahlungsdetektor (11) zum Empfang der von der Oberfläche (13) zurückgestreuten Messstrahlung (MS), insbesondere einem InGaAs-Detektor mit einer Bandbreite von mehr als 100 MHz,

- einer Auswerteinheit zur Bestimmung der Entfernung von einem Bezugspunkt der Entfernungsmessanordnung zur Oberfläche (13),

**gekennzeichnet durch**

- wenigstens einen Strahlteiler (4) für die Messstrahlung, der diese in zwei Strahlungsanteile (5, 6) aufteilt und

- wenigstens eine optische Verzögerungstrecke (3, 3'), durch die einer der Strahlungsanteile (6) gegenüber dem anderen Strahlungsanteil (5) zeitlich so verzögerbar ist, dass eine hierdurch bewirkte optische Pfaddifferenz der zu einer Entfernung im vorgegebenen Distanzbereich korrespondierenden optischen Pfaddifferenz zu- oder abzüglich der Kohärenzlänge des Lasers entspricht, wobei die Verzögerungsstrecke (3, 3') zumindest teilweise, insbesondere deren Wände (7), in Zerodur ausgebildet ist,

wobei die optische Verzögerungsstrecke (3) in Mach-Zehnder-Konfiguration ausgebildet ist, insbesondere mit optischen Verbindungen in Faserbauweise,

wobei nach einem ersten 50%-Strahlteiler (2',2''') ein erster der zwei Strahlungsanteile (6) in abgeschlossenen Luftkanälen in einem Zerodurteil (7) propagiert und mit einem zweiten 50%-Strahlteiler (2'',2'''') ein, durch den ersten 50%-Strahlteiler (2',2''') abgezweigter zweiter der zwei Strahlungsanteile (5) mit dem ersten Strahlungsanteil (6) zusammengeführt wird,

wobei die Verzögerungsstrecke (3, 3') als temperaturunabhängige Interferometer-Anordnung derart ausgebildet ist, dass der optische Weg in den Luftkanälen, insbesondere bei Temperaturänderungen, konstant bleibt und die Wege innerhalb des ersten und des zweiten Strahlteilers (2',2'',2''',2'''') für beide Arme der Interferometer-Anordnung der Verzögerungsstrecke (3) gleich sind.

7. Entfernungsmessanordnung nach Anspruch 6,
**dadurch gekennzeichnet, dass**
ein Umkehrprisma (8) am Zerodurteil (7) mit zwei reflektiv, insbesondere mit Gold, beschichteten Zerodurteilen (8' 8") ausgeführt ist
und /oder
der erste Strahlteiler (2' 2''') und zweite Strahlteiler (2" 2'''') aus $SIO_2$ gefertigt ist, insbesondere wobei deren Ein- und Auskoppelflächen antireflektiv beschichtet sind.

8. Entfernungsmessanordnung nach Anspruch 6 oder 7,
**dadurch gekennzeichnet, dass**
der Strahlteiler (4) die Messstrahlung in zwei unterschiedlich polarisierte Strahlungsanteile (5, 6) aufteilt.

9. Entfernungsmessanordnung nach einem der vorangehenden Ansprüche 6 bis 8,
**dadurch gekennzeichnet, dass**
die Verzögerungsstrecke kontinuierlich verstellbar oder aus einer Mehrzahl von Verzögerungsstrecken unterschiedlicher Länge auswählbar ist, insbesondere umschaltbar ist, insbesondere wobei die Verzögerungsstrecken durch optische Fasern unterschiedlicher Länge ausgebildet sind.

10. Entfernungsmessanordnung nach einem der vorangehenden Ansprüche 6 bis 9,
**dadurch gekennzeichnet, dass**
die Verzögerungsstrecke (3, 3') im Strahlgang vor der Sendeoptik angeordnet ist.

11. Entfernungsmessanordnung nach einem der vorangehenden Ansprüche 6 bis 10,
**dadurch gekennzeichnet, dass**
die Verzögerungsstrecke (3) im Strahlgang nach der Empfangsoptik angeordnet ist.

12. Entfernungsmessanordnung nach einem der vorangehenden Ansprüche 6 bis 11,
**dadurch gekennzeichnet, dass**
die interferometrische Entfernungsmessanordnung ein weiteres Interferometer als Kalibrierinterferometer aufweist, insbesondere in Etalon- oder Mach-Zehnder-Konfiguration.

13. Messgerät zur Vermessung von Oberflächen, insbesondere Koordinatenmessgerät zur Vermessung von industriellen Werkstücken, mit

- Führungsmitteln (14, 15) zur definiert abtastenden Führung eines Probenkopfes über die zu vermessende Oberfläche und einer
- interferometrischen Entfernungsmessanordnung nach einem der Ansprüche 6 bis 12, wobei
- der Probenkopf wenigstens einen Emissions- und Empfangsstrahlgang zur Emission der Messstrahlung (MS) und
- der Strahlgang in Mess- und Referenzinterferometerarm einen teilweise gemeinsamen Teil aufweisen, insbesondere mit einer den Referenzinterferometerarm definierenden und innerhalb der zum Emittieren des Laserstrahls verwendeten Strahlformungsoptik liegenden Referenzfläche, vorzugsweise der Referenzinterferometerarm durch einen Reflex an der optischen Austrittsfläche einer Gradientenindex-Linse der Strahlformungsoptik definiert ist.

**Claims**

1. A distance measuring method for measuring surfaces (13), in particular of industrial workpieces, having at least one

- generation of a laser beam, the wavelength of which is tunable by a frequency modulation of a laser source (1), in particular in the form of a ramp, in a wavelength range to provide measuring radiation (MS) having a coherence length, in particular a coherence length of greater than 1 mm, preferably of greater than 60 mm,
- emission of the measuring radiation (MS) onto the surface (13), which is located within a predefined distance range,
- reception of the measuring radiation (MS) backscattered from the surface (13), and
- interferometric distance measurement of a reference point to the surface (13) employing a measuring interferometer arm and a reference interferometer arm,
in particular wherein the measuring radiation (MS) is emitted during a scanning guiding over the surface (13) to be measured and is received again and during the interferometric distance measurements, measuring interferometer arm and reference interferometer arm have a partially shared beam path, preferably having a reference surface, which defines the reference interferometer arm and lies within a beam shaping optic used for emitting the laser beam,
**characterized in that**
- the predefined distance range lies at least partially, in particular completely outside the coherence length and
- the measuring radiation is split into two radiation fractions (5, 6), wherein one of the radiation fractions (6) is time-delayed in relation to the other fraction by means of a delay section (3, 3') such that an optical path difference thus caused corresponds to an optical path difference, which corresponds to a distance in the predefined distance range, plus or minus the coherence length of the laser, and wherein the delay section (3, 3') is at least partly embodied in Zerodur, in particular with walls (7) embodied in Zerodur, and
- the two radiation fractions (5, 6) are embodied by a first radiation fraction (6) and a second radiation fraction (5), in particular the measuring radiation is split into the first radiation fraction (6) and the second radiation fraction (5) by coupling into a first 50%-beam splitter (2', 2'''),
- wherein the first radiation fraction (6) propagates in sealed air channels in a Zerodur part (7),
and, in particular by means of a second 50% beam splitter (2'', 2''''), the first radiation fraction (6) and the second radiation fraction (5) are guided together again,
in particular wherein the first beam splitter (2', 2'''), the second beam splitter (2'', 2'''') and the Zerodur part (7) are designed and arranged such that the optical path in the air channels is constant independent of temperature as well as the paths within the beam splitters (2', 2'', 2''', 2'''') are identical for both interferometer arms resulting therefrom.

2. The distance measuring method as claimed in claim 1,
**characterized in that** the optical path difference caused by the delay corresponds

- at most to the optical path difference, which corresponds to the distance to the surface (13) to be measured, and
- at least to the optical path difference, which corresponds to the distance to the surface (13) to be measured, minus the coherence length of the laser,
or

the optical path difference caused by the delay corresponds
- at least to the optical path difference, which corresponds to the distance to the surface (13) to be measured and
- at most to the optical path difference, which corresponds to the distance to the surface (13) to be measured, plus the coherence length of the laser.

3. The distance measuring method as claimed in any one of claims 1 or 2,
**characterized in that** the delay occurs before the emission of the measuring radiation (MS) onto the surface (13) to be measured.

4. The distance measuring method as claimed in any one of claims 1 or 2,
**characterized in that** the delay occurs after the reception of the measuring radiation (MS) backscattered from the surface (13) to be measured.

5. The distance measuring method as claimed in any one of the preceding claims,
**characterized in that** a plurality of selectable discrete delay times is provided.

6. An interferometric distance measuring arrangement for measuring surfaces (13), in particular of industrial workpieces, having at least

- one frequency-modulated laser source (1) for generating at least one laser beam, the wavelength of which is tunable by the frequency-modulated laser source (1), in particular in the form of a ramp, in a wavelength range, for providing measuring radiation (MS) having a coherence length, in particular having a coherence length of greater than 1 mm, preferably of greater than 60 mm,
- one optical beam path having
- a transmitting optic for emitting the measuring radiation (MS) onto the surface,
- a receiving optic for receiving the measuring radiation (MS) backscattered from the surface, in particular a combined transmitting and receiving optic (12),
- a measuring interferometer arm and a reference interferometer arm, in particular having a partially shared beam path of the measuring interferometer arm and reference interferometer arm,
- one radiation detector (11) for receiving the measuring radiation (MS) backscattered from the surface (13), in particular an InGaAs detector having a bandwidth of greater than 100 MHz,
- one analysis unit for determining the distance from a reference point of the distance measuring arrangement to the surface (13),
**characterized by**
- at least one beam splitter (4) for the measuring radiation, which splits this measuring radiation into two radiation fractions (5, 6) and
- at least one optical delay section (3, 3'), by which one of the radiation fractions (6) can be time-delayed by means of a delay section (3, 3') in relation to the other radiation fraction (5) such that an optical path difference thus caused corresponds to an optical path difference which corresponds to a distance in the predefined distance range, plus or minus the coherence length of the laser, wherein the delay section (3, 3') is at least partly embodied in Zerodur, in particular with walls (7) embodied in Zerodur,
wherein the optical delay section (3) is designed in Mach-Zehnder configuration, in particular having optical connections in fiber construction,
wherein after a first 50%-beam splitter (2', 2''') a first of the two radiation fractions (6) propagates in sealed air channels in a Zerodur part (7) and with a second 50%-beam splitter (2'', 2'''') a second of the two radiation fractions (5) separated by the first 50%-beam splitter (2', 2''') is guided together with the first radiation fraction (6) again,
wherein the delay section (3, 3') is embodied as a temperature independent interferometer construction in such a way that the optical path in the air channels remains constant, in particular in case of temperature changes, and the paths within the first and second beam splitters (2', 2'', 2''', 2'''') are identical for both interferometer arms of the interferometer construction of the delay section (3).

7. The distance measuring arrangement as claimed in claim 6,
**characterized in that** an inversion prism (8) at the Zerodur part (7) is embodied with two reflectively, in particular with gold, coated Zerodur parts (8', 8'') and/or
the first beam splitter (2' 2''') and the second beam splitter (2'' 2'''') are manufactured from $SiO_2$, in particular wherein the coupling and decoupling surfaces thereof have an antireflective coating.

8. The distance measuring arrangement as claimed in claim 6 or 7,
**characterized in that** the beam splitter (4) splits the measuring radiation into two differently polarized radiation fractions (5, 6).

9. The distance measuring arrangement as claimed in any one of the preceding claims 6 to 8, **characterized in that** the delay section

- is continuously adjustable or
- is selectable from a plurality of delay sections of different lengths, in particular can be switched over, in particular wherein the delay sections are formed by optical fibers of different lengths.

10. The distance measuring arrangement as claimed in any one of the preceding claims 6 to 9, **characterized in that** the delay section (3, 3') is arranged in the beam path before the transmitting optic.

11. The distance measuring arrangement as claimed in any one of the preceding claims 6 to 10, **characterized in that** the delay section (3) is arranged in the beam path after the receiving optic.

12. The distance measuring arrangement as claimed in any one of the preceding claims 6 to 11, **characterized in that** the interferometric distance measuring arrangement has a further interferometer as a calibration interferometer, in particular in etalon configuration or Mach-Zehnder configuration.

13. A measuring device for measuring surfaces, in particular a coordinate measuring device for measuring industrial workpieces, having

- guide means (14, 15) for the defined scanning guiding of a sample head over the surface to be measured and an
- interferometric distance measuring arrangement as claimed in any one of the claims 6 to 12, wherein
- the sample head has at least one emission and reception beam path for the emission of the measuring radiation (MS) and
- the beam paths in the measuring interferometer arm and reference interferometer arm have a partially shared part, in particular having a reference surface, which defines the reference interferometer arm and lies within the beam shaping optic used for emitting the laser beam, preferably the reference interferometer arm is defined by a reflection at the optical exit surface of a gradient index lens of the beam shaping optic.

## Revendications

1. Procédé de mesure d'éloignement pour mesurer des surfaces (13), en particulier de pièces industrielles, consistant au moins à

- générer un faisceau laser dont la longueur d'onde peut être accordée dans une plage de longueur d'onde par une modulation de fréquence d'une source laser (1), en particulier en forme de rampe, pour fournir un rayonnement de mesure (MS) ayant une longueur de cohérence, en particulier une longueur de cohérence supérieure à 1 millimètre, de préférence supérieure à 60 millimètres,
- émettre le rayonnement de mesure (MS) sur la surface (13) se trouvant dans une plage de distance prédéfinie,
- recevoir le rayonnement de mesure (MS) rétrodiffusé par la surface (13) et
- mesurer de manière interférométrique l'éloignement d'un point de référence par rapport à la surface (13) en utilisant un bras d'interféromètre de mesure et un bras d'interféromètre de référence, en particulier dans lequel le rayonnement de mesure (MS) est émis puis reçu pendant un guidage en balayage sur la surface (13) à mesurer et, lors de la mesure d'éloignement interférométrique, les bras d'interféromètre de mesure et de référence présentent un trajet de faisceau partiellement commun, de préférence avec une surface de référence définissant le bras d'interféromètre de référence et située à l'intérieur d'une optique de formation de faisceau utilisée pour émettre le faisceau laser,
**caractérisé en ce que**
- la plage de distance prédéfinie se situe au moins partiellement, en particulier complètement, en dehors de la longueur de cohérence,
- le rayonnement de mesure est divisé en deux composantes de rayonnement (5, 6), l'une des composantes de rayonnement (6) étant retardée dans le temps par rapport à l'autre au moyen d'une ligne à retard (3, 3') de telle sorte qu'une différence de trajet optique ainsi produite corresponde à la différence de trajet optique correspondant à un éloignement dans la plage de distance prédéfinie augmentée ou diminuée de la longueur de cohérence du laser, et dans lequel la ligne à retard (3, 3') est réalisée au moins partiellement en Zerodur, en particulier avec des parois (7) réalisées en Zerodur, et

- les deux composantes de rayonnement (5, 6) sont constituées par une première composante de rayonnement (6) et une deuxième composante de rayonnement (5), en particulier le rayonnement de mesure étant divisé en la première composante de rayonnement (6) et la deuxième composante de rayonnement (5) par couplage dans un premier diviseur de faisceau à 50 % (2', 2'''),
- dans lequel la première composante de rayonnement (6) se propage dans des conduits d'air fermés dans une partie en Zerodur (7),

et la première composante de rayonnement (6) et la deuxième composante de rayonnement (5) sont réunies en particulier avec un deuxième diviseur de faisceau à 50 % (2", 2''''), en particulier le premier diviseur de faisceau (2', 2'''), le deuxième diviseur de faisceau (2", 2'''') et la partie en Zerodur (7) étant conçus et disposés de telle sorte que le chemin optique dans les conduits d'air soit constant indépendamment de la température et que les chemins à l'intérieur des diviseurs de faisceau (2', 2", 2''', 2'''') soient identiques pour les deux bras de l'agencement interférométrique résultant.

2. Procédé de mesure d'éloignement selon la revendication 1,
**caractérisé en ce que**
la différence de trajet optique produite par le retard correspond

- au plus à la différence de trajet optique correspondant à la distance par rapport à la surface (13) à mesurer et
- au moins à la différence de trajet optique correspondant à la distance par rapport à la surface (13) à mesurer diminuée de la longueur de cohérence du laser,
ou
la différence de trajet optique produite par le retard correspond
- au moins à la différence de trajet optique correspondant à la distance par rapport à la surface (13) à mesurer et
- au plus à la différence de trajet optique correspondant à la distance par rapport à la surface (13) à mesurer augmentée de la longueur de cohérence du laser.

3. Procédé de mesure d'éloignement selon l'une des revendications 1 ou 2, **caractérisé en ce que**
le retard se produit avant l'émission du rayonnement de mesure (MS) sur la surface (13) à mesurer.

4. Procédé de mesure d'éloignement selon l'une des revendications 1 ou 2, **caractérisé en ce que**
le retard se produit après la réception du rayonnement de mesure (MS) rétrodiffusé par la surface (13) à mesurer.

5. Procédé de mesure d'éloignement selon l'une des revendications précédentes, **caractérisé en ce qu'**une pluralité de temps de retard discrets sélectionnables est fournie.

6. Agencement de mesure d'éloignement interférométrique pour mesurer des surfaces (13), en particulier de pièces industrielles, comportant au moins

- une source laser modulée en fréquence (1) pour générer au moins un faisceau laser dont la longueur d'onde peut être accordée dans une plage de longueur d'onde par la source laser modulée en fréquence (1), en particulier en forme de rampe, pour fournir un rayonnement de mesure (MS) d'une longueur de cohérence, en particulier d'une longueur de cohérence supérieure à 1 millimètre, de préférence supérieure à 60 millimètres,
- un trajet de faisceau optique avec

  ◦ une optique d'émission pour émettre le rayonnement de mesure (MS) sur la surface,
  ◦ une optique de réception pour recevoir le rayonnement de mesure (MS) rétrodiffusé par la surface, en particulier une optique d'émission et de réception combinée,
  ◦ un bras d'interféromètre de mesure et un bras d'interféromètre de référence, en particulier avec un trajet de faisceau partiellement commun du bras d'interféromètre de mesure et du bras d'interféromètre de référence,

- un détecteur de rayonnement (11) pour recevoir le rayonnement de mesure (MS) rétrodiffusé par la surface (13), en particulier un détecteur InGaAs ayant une largeur de bande supérieure à 100 MHz,
- une unité d'évaluation pour déterminer l'éloignement d'un point de référence de l'agencement de mesure d'éloignement par rapport à la surface (13),

**caractérisée par**

- au moins un diviseur de faisceau (4) pour le rayonnement de mesure, qui divise celui-ci en deux composantes de rayonnement (5, 6), et
- au moins une ligne à retard optique (3, 3') par laquelle l'un des composantes de rayonnement (6) peut être retardée dans le temps par rapport à l'autre composante de rayonnement (5) de telle sorte qu'une différence de trajet optique ainsi produite corresponde à la différence de trajet optique correspondant à un éloignement dans la plage de distance prédéfinie augmentée ou diminuée de la longueur de cohérence du laser, la ligne à retard (3, 3') étant réalisée au moins partiellement, en particulier ses parois (7), en Zerodur,

dans lequel la ligne à retard optique (3) est réalisée en configuration Mach-Zehnder, en particulier avec des liaisons optiques par fibres,

dans lequel, après un premier diviseur de faisceau à 50 % (2', 2'''), une première des deux composantes de rayonnement (6) se propage dans des conduits d'air fermés dans une partie en Zerodur (7) et, avec un deuxième diviseur de faisceau à 50 % (2'', 2''''), une deuxième des deux composantes de rayonnement (5) qui est dérivée par le premier diviseur de faisceau à 50 % (2', 2''') est réunie avec la première composante de rayonnement (6),

dans lequel la ligne à retard (3, 3') est réalisée sous la forme d'un agencement interférométrique indépendant de la température, de telle sorte que le chemin optique dans les conduits d'air reste constant, en particulier en cas de changement de température, et que les chemins à l'intérieur des premier et deuxième diviseurs de faisceau (2', 2'', 2''', 2'''') soient identiques pour les deux bras de l'agencement interférométrique de la ligne à retard (3).

7.  Agencement de mesure d'éloignement selon la revendication 6,
    **caractérisé en ce**
    **qu'**un prisme inverseur (8) sur la partie en Zerodur (7) est réalisé avec deux parties en Zerodur (8' 8'') réfléchissantes, en particulier revêtues d'or,
    et/ou
    **que** le premier diviseur de faisceau (2' 2''') et le deuxième diviseur de faisceau (2'', 2'''') sont fabriqués en $SIO_2$, en particulier leurs surfaces de couplage et de découplage étant munies d'un revêtement antiréfléchissant.

8.  Agencement de mesure d'éloignement selon la revendication 6 ou 7,
    **caractérisé en ce que**
    le diviseur de faisceau (4) divise le rayonnement de mesure en deux composantes de rayonnement (5, 6) de polarisation différente.

9.  Agencement de mesure d'éloignement selon l'une des revendications 6 à 8 précédentes,
    **caractérisé en ce que**
    la ligne à retard est réglable en continu ou sélectionnable parmi une pluralité de lignes à retard de différentes longueurs, en particulier commutable, les lignes à retard étant en particulier formées de fibres optiques de différentes longueurs.

10. Agencement de mesure d'éloignement selon l'une des revendications 6 à 9 précédentes,
    **caractérisé en ce que**
    la ligne à retard (3, 3') est disposée avant l'optique d'émission dans le trajet de faisceau.

11. Agencement de mesure d'éloignement selon l'une des revendications 6 à 10 précédentes,
    **caractérisé en ce que**
    la ligne à retard (3) est disposée après l'optique de réception dans le trajet de faisceau.

12. Agencement de mesure d'éloignement selon l'une des revendications 6 à 11 précédentes,
    **caractérisé en ce que**
    l'agencement de mesure d'éloignement interférométrique présente un autre interféromètre comme interféromètre d'étalonnage, en particulier en configuration étalon ou Mach-Zehnder.

13. Appareil de mesure pour mesurer des surfaces, en particulier appareil de mesure de coordonnées pour mesurer des pièces industrielles, comportant :

    - des moyens de guidage (14, 15) pour le guidage en balayage défini d'une tête de sonde sur la surface à mesurer et

- un agencement de mesure d'éloignement interférométrique selon l'une des revendications 6 à 12, dans lequel

- la tête de sonde présente au moins un trajet de faisceau d'émission et de réception pour l'émission du rayonnement de mesure (MS) et

- le trajet de faisceau dans le bras d'interféromètre de mesure et de référence présente une partie partiellement commune, en particulier avec une surface de référence définissant le bras d'interféromètre de référence et située à l'intérieur d'une optique de formation de faisceau utilisée pour émettre le faisceau laser, de préférence le bras d'interféromètre de référence est défini par une réflexion sur la surface optique de sortie d'une lentille à gradient d'indice de l'optique de formation de faisceau.

Fig. 1

Fig. 2

Fig. 3

Fig. 4

Fig. 5

Fig. 6

Fig. 7

Fig. 8a

Fig. 8b

Fig. 9a

Fig. 9b

*Fig. 10*

*Fig. 11*

Fig. 12

Fig. 13

$dB$

$OPD$

Fig. 14

$w(z, w_0, d_{w0})$

$-w(z, w_0, d_{w0})$

$z$

Fig. 15

*Fig. 16*

*Fig. 17*

$$w(z, w_0, d_{w0})$$

$$-w(z, w_0, d_{w0})$$

Fig. 18

Fig. 19

Fig. 20

**EP 2 724 116 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009036861 A1
- US 20070115476 A1
- WO 2009059406 A1
- US 2004061865 A
- US 2008117436 A
- DE 19819762
- US 4627731 A